(19) Europäisches Patentamt

European Patent Office

Office européen des brevets

(11) Veröffentlichungsnummer: **0 324 117 B1**

(12) **EUROPÄISCHE PATENTSCHRIFT**

(45) Veröffentlichungstag der Patentschrift: **27.05.92**

(51) Int. Cl.⁵: **B23D 27/00**, //G05B19/41

(21) Anmeldenummer: **88120752.6**

(22) Anmeldetag: **12.12.88**

(54) **Verfahren zur Steuerung der Bahn eines Stanzwerkzeugs.**

(30) Priorität: **23.12.87 DE 3743869**

(43) Veröffentlichungstag der Anmeldung:
**19.07.89 Patentblatt 89/29**

(45) Bekanntmachung des Hinweises auf die
Patenterteilung:
**27.05.92 Patentblatt 92/22**

(84) Benannte Vertragsstaaten:
**CH DE FR IT LI SE**

(56) Entgegenhaltungen:
**EP-A- 0 178 640**
**CH-A- 421 246**
**DE-A- 2 512 458**
**US-A- 4 602 541**

(73) Patentinhaber: **SIEMENS AKTIENGESELL-
SCHAFT
Wittelsbacherplatz 2
W-8000 München 2(DE)**

(72) Erfinder: **Dolansky, Stefan, Dipl.-Ing.
Pellergasse 2
W-8500 Nürnberg(DE)**
Erfinder: **Reetz, Volker, Dipl.-Ing.
Heckenrosenweg 4
W-8500 Nürnberg(DE)**
Erfinder: **Brömer, Günter, Dipl.-Ing.
Andreas-Paulus-Strasse 59
W-8521 Spardorf(DE)**

# Beschreibung

Die Erfindung bezieht sich auf ein Verfahren zur numerischen Steuerung der Bahn eines polygonalen Stanzwerkzeugs einer Stanzmaschine, wobei das Werkzeug so um eine Drehachse in Stanzrichtung drehbar ist, daß die Schneidkante des Werkzeugs tangential entlang der Kontur des Werkstücks führbar ist, wobei der Steuerung die Kontur des Werkstücks, die dem Werkzeug eigenen Polygonabmessungen und die Lage der Drehachse des Werkzeugs vorgegeben werden, und wobei mit dem Auslösen eines bearbeitungsrichtungsspezifischen Befehls zum Bewirken des Stanzvorgangs eine äquidistante Bewegungsbahn für das Werkzeug generiert wird, die mit dem Abstand der jeweiligen Schneidkante zur Drehachse des Werkzeugs die Kontur des Werkstücks umfaßt.

Um Blechteile einer vorgegebenen Kontur aus Blechtafeln herauszuarbeiten, ist es üblich, sogenannte Nibbelmaschinen einzusetzen. Wenn das Nibbelwerkzeug rund ausgebildet ist, muß dann, wenn lineare Abschnitte der Kontur zu stanzen sind, eine relativ hohe Anzahl von Stanzhüben pro Wegeinheit vorgenommen werden, um eine geringe Rauhigkeit zu erzielen. Dadurch ist die Geschwindigkeit, mit der ein Werkstück erzeugt werden kann, u.U. stark begrenzt. Aus diesem Grunde werden bei modernen Stanzmaschinen auch polygonale Stanzwerkzeuge (US-A-4 602 541) eingesetzt, die mit jedem Stanzvorgang einen gegenüber einem Nibbelvorgang mit Rundwerkzeugen relativ großen Abschnitt der gewünschten Kontur ausstanzen. (Als polygonal können alle sehr stark von der Kreisform abweichenden Werkzeuge bezeichnet werden.) Das polygonale Werkzeug ist dabei drehbar ausgeführt, so daß Konturen in beliebiger Richtung sowohl als Innen- als auch als Außenkontur bearbeitet werden können. Ferner ist die Verwendung von Werkzeugen mit einer Formgebung, die als tragflächenprofilartig beschreibbar ist, aus der EP-A-0 178 640 bekannt. Die Vorgabe der Bahnen für das Stanzwerkzeug an die numerische Steuerung einer Stanzmaschine ist dabei relativ aufwendig, da die Bahn zunächst in eine Vielzahl von Teilbahnen zerlegt werden muß, die jeweils einzeln der Steuerung vorgegeben werden.

Aufgabe der Erfindung ist es, ein Verfahren der eingangs genannten Art so auszubilden, daß eine Bahn für ein polygonales Stanzwerkzeug einer Stanzmaschine in ausgesprochen einfacher Weise ermittelt werden kann, bei der sichergestellt ist, daß keine Konturverletzungen erfolgen und bei der kurze Verfahrwege für das Werkzeug erreicht werden können.

Gemäß der Erfindung wird diese Aufgabe dadurch gelöst, daß von der Steuerung die signifikanten Punkte auf der äquidistanten Bewegungsbahn ermittelt werden, an denen die in Bearbeitungsrichtung jeweils vordere bzw. hintere Ecke der Schneidkante jeweils einen Knick der Kontur des Werkstücks erreicht, daß die jeweils sich vor und hinter einem Knick ergebenden Bahnpunkte der äquidistanten Bewegungsbahn jeweils den Anfangs- und Endpunkt einer dem jeweiligen Knick der Kontur zugeordneten Verfahrbahn bestimmen und daß die resultierende Bahn des Werkzeugs additiv aus den Verfahrbahnen sowie den diesen verbindenden Abschnitten der äquidistanten Bewegungsbahn gebildet wird, wobei die Verfahrbahnen jeweils mit vom Werkstück abgehobenem Werkzeug durchfahren werden.

Dadurch, daß jede Verfahrbahn jeweils als eine direkte lineare Bahn ausgebildet ist, wird der Bahnweg minimiert.

Dadurch, daß die Breite der vom Werkzeug benötigten Bearbeitungszone auf das Einhalten eines vorgegebenen Maximalwertes überwacht wird, kann sichergestellt werden, daß dann, wenn eine Vielzahl von Werkstücken aus einer Platte herauszustanzen ist, der Stanzvorgang für die einzelnen Werkstücke sich nicht so überschneidet, daß es zu Ausschuß an Werkstücken kommt.

Ein Ausführungsbeispiel der Erfindung ist in der Zeichnung dargestellt und wird im folgenden näher erläutert. Dabei zeigen:

FIG 1 signifikante Positionen des Werkzeugs,
FIG 2 eine mögliche äquidistante Bewegungsbahn,
FIG 3 die resultierende Bahn und
FIG 4 ein Blockschaltbild.

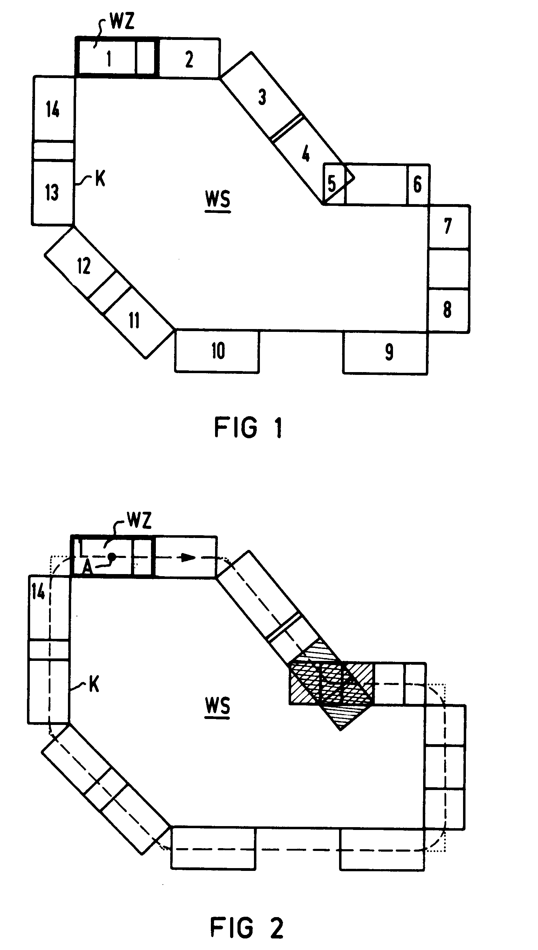

In der Darstellung gemäß FIG 1 ist ein Werkstück WS gezeigt, das eine Kontur K aufweist, die sich aus einer Reihe von Kanten ergibt, die jeweils knickartig ineinander übergehen. Mit 1 bis 14 sind alle für diese Kontur K signifikante Positionen eines Werkzeuges WZ gezeigt, bei dem es sich um ein rechteckiges Stanzwerkzeug handelt. Die Position 1 wird dabei durch stark ausgezogene Linien markiert. Das Werkzeug WZ wird für den Stanzvorgang fortlaufend gehoben und gesenkt, wobei der maximale Vorschub des Stanzwerkzeuges im aufgehobenen Zustand durch die Länge der wirksamen Stanzkante des Werkzeugs WZ vorgegeben wird.

Ausgehend von der Position 1 wird das Werkzeug WZ zunächst auf einer ersten linearen Bewegungsbahn bis zu einer Position 2 geführt, dann wird das Werkzeug WZ um die erste Kante des zu erstellenden Werkstückes WS gedreht, gelangt dann in die Position 3, vollführt den nächsten linearen Wegabschnitt bis zur Position 4, wird dort in die Position 5 verschwenkt und gelangt dann über einen weiteren linearen Wegabschnitt in die Position 6. In entsprechender Weise wird das Werkzeug WZ bis zur Position 14 verfahren. Die Bewegungsbahn muß einer Steuerung für die zugehörige, der Übersichtlichkeit halber nicht dargestellte Stanzmaschine so eingeprägt werden, daß die Raumkoordinaten für alle signifikanten Positionen 1 bis 14 einzeln vorgegeben werden. Ein derartiges Vorgehen ist sehr arbeitsintensiv und insbesondere dann, wenn kleine Losgrößen gefertigt werden, ist ein solches Vorgehen dementsprechend unökonomisch.

Bei der Steuerung von Fräswerkzeugen ist es üblich, die Werkzeuge in einer äquidistanten Bahn um das Werkstück zu führen, wobei der Abstand sich jeweils durch den Abstand der Drehachse des Fräswerkzeugs zur wirksamen Schneide ergibt. In entsprechender Weise wäre es nun denkbar, gemäß der Darstellung nach FIG 2, das Werkzeug WZ, das ja ebenfalls um eine Achse A drehbar ist, um das Werkstück WS zu führen. Die von der Fräsbearbeitung her übliche Anweisung für die Steuerung könnte dann unverändert übernommen werden. In der Darstellung gemäß FIG 2 ist eine derartige äquidistante Bewegungsbahn BB durch eine gestrichelte Linie angedeutet. Die Bewegungsrichtung im Uhrzeigersinn ist durch einen Pfeil auf dieser Bahn angegeben. Im übrigen entsprechen die signifikanten Positionen der Werkzeugs WZ den Positionen 1 bis 14 gemäß FIG 1. Wenn die Achse A des Werkzeugs WZ längs der äquidistanten Bewegungsbahn BB geführt wird, führt jedoch jeder hohlkehlenartiger Knick der Bewegungsbahn dazu, daß das Werkzeug WZ die erwünschte Kontur K des Werkstücks WS verletzt. Dies ist beim Ausführungsbeispiel durch eine schraffiert dargestellte unerwünschte Position des Werkzeugs WZ gezeigt. Aus diesem Grunde ist eine Vorgabe gemäß der für Fräszwecke bekannten äquidistanten Bewegungsbahn BB für das Werkzeug WZ nicht opportun.

Bei handelsüblichen Steuerungen wird unter einer einer äquidistanten Bewegungsbahn auch eine solche Bahn verstanden, die an den vorspringenden Kanten der Kontur den durch eine gepunktete Linie angeordneten Verlauf aufweist.

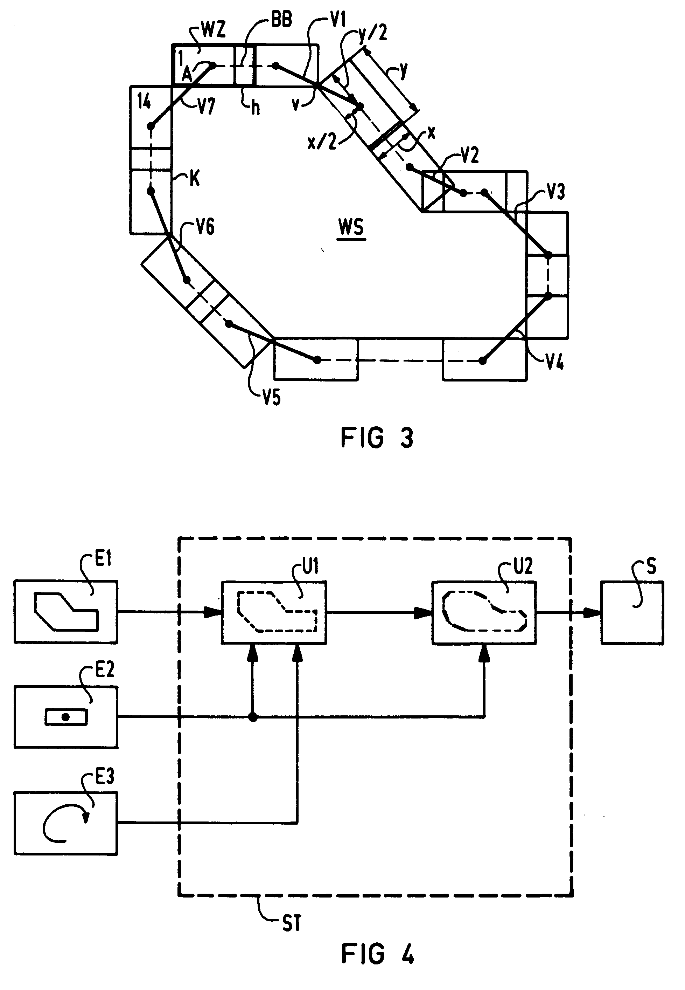

In der Darstellung gemäß FIG 3 ist wiederum das gleiche Werkstück WS gezeigt, das vom Werkzeug WZ geformt werden soll. Dieses Werkzeug WZ nimmt demgemäß wiederum die Positionen 1 bis 14 ein. In dieser Darstellung die für das Verständnis der Erfindung ganz wesentlich ist, sind die geometrischen Daten für das Werkzeug WZ eingezeichnet. So ist in der Position 3 gezeigt, daß die Länge der Schneidkante einer Strecke y entspricht, während die Breite der Strecke x entspricht. Die Drehachse A des polygonalen Werkzeugs WZ befindet sich im geometrischen Mittelpunkt des Werkzeugs WZ bei den Koordinatenwerten x/2 und y/2.

Die Bahn, auf der das Werkzeug WZ entlang dem Werkstück WS geführt wird, ist dabei im Bereich der signifikanten Positionen 1 bis 14 mit stark ausgezogen dargestellten linearen Verfahrbahnen V1 bis V7 angegeben. Diese ergeben sich als direkte Verbindungslinien zwischen den Positionen der Achse A des Werkzeugs WZ an den beidseits eines Knickes der Kontur K jeweils vorliegenden signifikanten Positionen 1 bis 14. Bei diesen signifikanten Positionen erreicht jeweils die in Bearbeitungsrichtung vordere Ecke v bzw. hintere Ecke h der Schneidkante jeweils einen Knick der Kontur K. Die resultierenden Verfahrbahnen V1 bis V7 sind an ihren Anfangs- und Endpunkten jeweils über die äquidistante Bewegungsbahn BB gemäß FIG 2 miteinander verbunden. Während des Durchfahrens dieser Abschnitte der äquidistanten Bewegungsbahn BB erfolgt der Stanzvorgang. Die Verfahrbahnen V1 bis V7 werden jeweils mit vom Werkstück WS abgehobenem Werkzeug WZ durchfahren.

Damit ist zum einen sichergestellt, daß keine Konturverletzungen des Werkstücks WS erfolgen, wie dies zwischen den signifikanten Positionen 4 und 5 bei Verwendung der äquidistanten Bewegungsbahn BB gemäß FIG 2 erfolgen würde, zum anderen wird aber auch gewährleistet, daß alle übrigen Kanten, an denen keine Verletzungsgefahr der Kontur K des Werkstückes WS besteht, auf kürzest möglichem Weg erreicht werden.

In der Darstellung gemäß FIG 4 ist ein Blockschaltbild gezeigt, das zur nochmaligen Veranschaulichung des erfindungsgemäßen Verfahren dient. Mit einer Eingabe E1 wird einem Umsetzer U1 einer gestrichelt angedeuteten Steuerung ST einer Stanzmaschine S die Kontur K eines Werkstücks, z.B. des Werkstückes WS, vorgegeben. Über eine Eingabe E2 werden die Abmessungen des jeweiligen Stanzwerkzeugs, z.B. des Werkzeugs WZ, dem Umsetzer U1 und einem Umsetzer U2 der Steuerung ST eingeprägt. Über eine Eingabe E3 wird dem Umsetzer U1 der Richtungssinn der Bahn mitgeteilt, in dem das Stanzen auszuführen ist.

Aus den Werten der Eingaben E1, E2 und E3 ermittelt der Umsetzer U1 eine äquidistante Bewegungsbahn, wie sie für Fräszwecke üblich ist. Diese äquidistante Bewegungsbahn wird an den Umsetzer U2 weitergeleitet und dort teilweise durch die in der Darstellung gemäß FIG 3 erläuterten Verfahrbahnen V1 bis V7 ersetzt, indem vom Umsetzer U2 die Werkzeugdaten entsprechend berücksichtigt werden. Der Umsetzer U2 liefert dann eine resultierende Bahn für das polygonale Stanzwerkzeug, die von der Stanzmaschine S durchfahren werden kann.

Im Ausführungsbeispiel ist als polygonales Werkzeug ein rechteckiges Werkzeug vorgesehen. Es ist jedoch auch möglich, daß beispielsweise trapezförmige Werkzeuge verwendet werden, wobei die Drehachse dieser Werkzeuge auch außerhalb des Trapezes liegen können. Derartige trapezförmige Werkzeuge werden häufig dann benutzt, wenn scharfe Innenkanten mit Winkeln kleiner 90° zu stanzen sind.

Insbesondere dann, wenn Stanzwerkzeuge eine ausgeprägte Rechteckform haben, kann dies dazu führen, daß beim Ausstanzen von Einkerbungen in einem Werkstück das Werkzeug einen relativ breiten Bearbeitungsraum zur Kontur hin benötigt. Dies kann u.U. dazu führen, daß die angestrebte Kontur eines weiteren, aus der jeweils vorliegenden Blechtafel herauszustanzenden Werkstücks verletzt werden könnte. Daher wäre es möglich, daß die Steuerung jeweils die Breite der Bearbeitungszone berechnet und dann, wenn ein vorgegebener Maximalwert überschritten wird, ein Kennsignal liefert, das den Bediener darauf hinweist, daß es angezeigt ist, ein weniger breites Werkzeug für den Stanzvorgang zu benutzen.

Ferner sei darauf hingewiesen, daß mit einem polygonalen Werkzeug auch zirkulare Konturabschnitte gestanzt werden können. Die Güte der Rundung hängt dabei vom Stanzvorschub beim Bearbeiten dieses Abschnitts ab, so daß in diesen Bereichen die Vorschubgeschwindigkeit gegenüber derjenigen beim Bearbeiten von linearen Abschnitten sinnvoller Weise reduziert wird.

## Patentansprüche

1. Verfahren zur numerischen Steuerung der Bahn eines polygonalen Stanzwerkzeugs einer Stanzmaschine, wobei das Werkzeug (WZ) so um eine Drehachse in Stanzrichtung drehbar ist, daß die Schneidkante des Werkzeugs (WZ) tangential entlang der Kontur des Werkstücks (WS) führbar ist, wobei der Steuerung (ST) die Kontur (K) des Werkstücks (WS), die dem Werkzeug (WZ) eigenen Polygonabmessungen (x,y) und die Lage der Drehachse (x/2, y/2) des Werkzeugs (WZ) vorgegeben werden und wobei mit dem Auslösen eines bearbeitungsrichtungsspezifischen Befehls zum Bewirken des Stanzvorgangs eine äquidistante Bewegungsbahn (BB) für das Werkzeug (WZ) generiert wird, die mit dem Abstand der jeweiligen Schneidkante zur Drehachse des Werkzeugs (WZ) die Kontur (K) des Werkstücks (WS) umfaßt, **dadurch gekennzeichnet, daß** von der Steuerung (ST) die signifikanten Punkte (P1 bis P14) auf der äquidistanten Bewegungsbahn (BB) ermittelt werden, an denen die in Bearbeitungsrichtung jeweils vordere (v) bzw. hintere (h) Ecke der Schneidkante jeweils einen Knick der Kontur (K) des Werkstücks (WS) erreicht, daß die jeweils sich vor und hinter einem Knick ergebenden Bahnpunkte der äquidistanten Bewegungsbahn (BB) jeweils den Anfangs- und Endpunkt einer dem jeweiligen Knick der Kontur (K) zugeordneten Verfahrbahn (V1 bis V7) bestimmen und daß die resultierende Bahn des Werkzeugs (WZ) additiv aus den Verfahrbahnen (V1 bis V7) sowie den diesen verbindenden Abschnitten der äquidistanten Bewegungsbahn (BB) gebildet wird, wobei die Verfahrbahnen (V1 bis V7) jeweils mit vom Werkstück (WS) abgehobenen Werkzeug (WZ) durchfahren werden.

2. Verfahren nach Anspruch 1, **dadurch gekennzeichnet,** daß jede Verfahrbahn (V1 bis V7) jeweils als eine direkte lineare Bahn ausgebildet ist.

3. Verfahren nach Anspruch 1 oder 2, **dadurch gekennzeichnet,** daß die Breite der vom Werkzeug (WZ) benötigten Bearbeitungszone auf das Einhalten eines vorgegebenen Maximalwertes überwacht wird.

## Claims

1. Method for the numerical control of the path of a polygonal punching tool of a punch press, wherein the tool (WZ) can be rotated about an axis of rotation in the punching direction in such a way that the cutting edge of the tool (WZ) can be guided tangentially along the contour of the workpiece (WS), wherein the contour (K) of the workpiece (WS), the polygon dimensions (x,y) specific to the tool (WZ) and the position of the axis of rotation (x/2, y/2) of the tool (WZ) are specified for the control (ST) and wherein with the initiation of a processing-direction-specific command for the effecting of the punching process an equidistant movement path (BB) is generated for the tool (WZ), the movement path comprising the contour (K) of the workpiece (WS) with the clearance of the respective cutting edge to the axis of rotation of the tool (WZ), characterized in that the significant points (P1 to P14) on the equidistant movement path (BB) are determined by the control (ST), at which points the front (v) or back (h) corner of the cutting edge, in the processing direction respectively, in each case reaches a bend of the contour (K) of the workpiece (WS), in that the path points of the equidistant movement path (BB), emerging in each case in front of and behind a bend, in each case determine the starting point and end point of a conveying path (V1 to V7) associated with the respective bend of the contour (K) and in that the resulting path of the tool (WZ) is formed by addition of the conveying paths (V1 to V7) as well as the sections of the equidistant movement path (BB) connecting these, with the tool (WZ) passing through the conveying paths (V1 to V7) in each case, the tool (WZ) being lifted by the workpiece (WS).

2. Method according to claim 1, characterized in that each conveying path (V1 to V7) is formed in each case as a direct linear path.

3. Method according to claim 1 or 2, characterized in that the width of the processing zone required by the tool (WZ) is monitored for the maintenance of a specified maximum value.

**Revendications**

1. Procédé de commande numérique de la trajectoire d'un outil polygonal de découpage d'une presse à découper, selon lequel l'outil (WZ) peut tourner autour d'un axe de rotation dans la direction de découpage de sorte que l'arête de découpage de l'outil (WZ) peut être guidée tangentiellement le long du contour de la pièce à usiner (WS), l'unité de commande (ST) du contour (K) de la pièce à usiner (WS), les dimensions (x,y) du polygone propres à l'outil (WZ) et la position de l'axe de rotation (x/2, y/2) de l'outil (WZ) étant prédéterminées et une trajectoire équidistante de déplacement (BB) pour l'outil (WZ) étant produite lors du déclenchement d'un ordre spécifique à la direction d'usinage pour l'exécution de l'opération de découpage, cette trajectoire entourant le contour (K) de la pièce à usiner (WS) à une distance égale à la distance entre le bord de coupe et l'axe de rotation de l'outil (WZ), caractérisé par le fait que l'unité de commande (ST) détermine les points importants (P1 à P14) situés sur la trajectoire équidistante de déplacement (BB) et au niveau desquels le coin avant (v) ou arrière (h) du bord de coupe, dans la direction d'usinage, atteint respectivement un coude du contour (K) de la pièce à usiner (WS), que les points, que l'on obtient en avant et en arrière d'un coude, de la trajectoire équidistante de déplacement (BB) détermine respectivement le point de départ et le point d'extrémité d'une trajectoire de déplacement (V1 à V7) associée au coude respectif de contour (K), et que la trajectoire résultante de l'outil (WZ) est formée, de façon additive, à partir des trajectoires de déplacement (V1 à V7) ainsi que des sections, qui raccordent ces trajectoires, de la trajectoire équidistante de déplacement (BB), les trajectoires de déplacement (V1 à V7) étant parcourues respectivement par l'outil (WZ) écarté de la pièce à usiner (WS).

2. Procédé suivant la revendication 1, caractérisé par le fait que chaque trajectoire de déplacement (V1 à V7) est constituée respectivement sous la forme d'une trajectoire linéaire directe.

3. Procédé suivant la revendication 1 ou 2, caractérisé par le fait que l'on contrôle la largeur de la zone de traitement dont l'outil (WZ) a besoin, en vue de respecter une valeur maximale prédéterminée.

FIG 1

FIG 2

FIG 3

FIG 4